# EUROPEAN PATENT APPLICATION

(11) **EP 2 037 422 A2**
(43) Date of publication of application: **18.03.2009**
(21) Application number: 08164146.6
(22) Date of filing: 11.09.2008
(51) Int. Cl.: G07F 7/02, G07F 17/26, G07F 7/00, G07F 7/08, G07F 7/10, G07G 3/00

(54) **Data processing capability for card based bill payment for copying service**

(30) Priority: 12.09.2007 US 900506
(71) Applicant: Xerox Corporation, Rochester, New York 14644 (US)
(72) Inventor: Buck, Kenneth J., Webster, NY New York 14580 (US); Mukund, Vanditha, Penfield, NY New York 14528 (US)
(74) Representative: Grünecker, Kinkeldey, Stockmair & Schwanhäusser Anwaltssozietät

(57) **Abstract**

A data processing card includes computer-readable data relating to at least one of processing information and payment information for a print job. The card includes an unpaid for limit associated with processing the print job. A card includes information indicative of a payment source associated with a user. The card further includes computer-readable data corresponding to user information for processing and payment for a print job. A card enables a first party to program the card to relate the data to processing and payment for the print job, to program the card create or access an account for the first party or a second party, and the card contains data for processing or payment for a print job via the account. A method includes following a user executing a print job, an electronic article surveillance reader alarms if a tag is within the read range of the reader.

## Description

### BACKGROUND

### Technical Field

The present disclosure relates to payment processing systems and methods, and more particularly, to methods and machines for effecting the payment for, or accounting of, reproduction copies.

### Description of Related Art

The inventors have recognized that many large retail businesses generate revenue from the reproduction of documents by their customers in a Self Service environment. These companies require a way to vend copies or prints in exchange for hard currency at the point where those copies or prints are made.

The current foreign device interface from copiers has been connected to a number of vending control devices that offer a variety of services. Some of these use credit cards, smart cards and magnetic cards that represent currency in some form or another. Charge cards and debit cards reflect a monetary relationship with the banking industry, whereas smart cards or magnetic stripe cards may be used to point to money stored in a local point of sale system. The inventors have recognized that typically this account only contains the amount of money associated with the particular card.

In addition to the foregoing, large enterprise professional service accounts for example legal or engineering firms generate revenue from documents made to capture the output of their efforts. These companies require a way to keep track of the number of documents created for each client and possibly the related subject or other attributes. Today this is done by a series of multi digit numbers that identify the Client or Subject or matter. The inventors have recognized that because of the number of possibilities, these numbers are necessarily long and un-intuitive and certainly hard if not impossible to remember. Current methods require operators to key these numbers in by hand, causing the possibility of mis-keying errors that lead to delays and incorrect billing.

### SUMMARY

To advance the state of the art with respect to methods of processing and payment for a print job, the present disclosure relates to a plurality of data processing cards. More particularly, the present disclosure relates to a data processing card wherein the card includes computer-readable data corresponding to information relating to processing a print job, and wherein the card includes an unpaid for limit associated with the processing of a print job.

According to aspects illustrated herein, there is provided a data processing card wherein the card includes computer-readable data relating to at least one of processing information and payment information for a print job. The payment information includes information indicative of at least one payment source associated with at least one user, and the data processing card further includes computer-readable data corresponding to user information relating to the at least one of processing and payment for a print job.

According to still other aspects illustrated herein, there is provided a data processing card, wherein the card includes computer-readable data. The card is configured to enable a first party to program the card to relate the computer-readable data to at least one of processing and payment for a print job, wherein the card is configured to enable the first party to program the card to at least one of create and access an account associated with one of the first party and at least a second party, and wherein the card includes computer-readable data corresponding to information relating to at least one of processing and payment for a print job via the account for the one of the first party and at least a second party.

According to aspects illustrated herein, there is provided a method of using a data processing card to process payment information for a print job. The method includes providing a data processing card having an electronic article surveillance tag to a user, wherein the data processing card enables payment for a print job. The method also includes providing at least one print device, and providing an electronic article surveillance reader having a read range, wherein following the user using the data processing card to execute a print job using the at least one print device, the electronic article surveillance reader actuates an alarm by detecting the electronic article surveillance tag if the tag is within the read range of the reader.

According to still other aspects illustrated herein, there is provided also a method of using a data processing card to process payment information for a print job at a point of service. The method includes enabling a user to arrive at a point of service with at least one document for which a print job request is to be executed by the user; enabling the user to obtain a data processing card for a print job,
wherein the data processing card has an unpaid for limit associated with the print job; enabling the user to run a print job at a print device; and enabling completing at least a portion of the print job as print job output by producing at least a portion of the at least one document, while accumulating limit data for payment for the print job.

In a further embodiment the limit associated with the print job is at least one of a financial limit and a usage limit.
In a further embodiment the method comprises:
enabling adjusting of the limit by instructing a processor to increase or decrease the limit associated with the print job.

In a further embodiment the point of service includes a self-service payment processor to which the limit data is transmitted,
wherein the user is enabled to pay for the print job at the self-service payment processor based on the limit data, and
wherein the user is enabled to leave the data processing card within the point of service prior to exiting the point of service.

In a further embodiment the point of service includes a self-service payment processor configured to enable the user to pay for the print job based on the print job bill.

### BRIEF DESCRIPTION OF THE DRAWINGS

Various embodiments of the present disclosure will be described herein below with reference to the figures wherein:
FIG. 1 illustrates an exemplary embodiment of a payment data processing card that may be dedicated to an account associated with a preferred or custom user for processing of a print job request according to the present disclosure;
FIG. 2 illustrates a method of using the payment data processing card of FIG. 1 to authorize and process a print job request for a preferred or custom user according to the present disclosure;
FIG. 2A illustrates data processing cards according to the present disclosure that are associated with a particular set of accounting data residing on a server or other device having memory storage capabilities;
FIG. 3 is an exemplary embodiment of a payment data processing card that contains at least one unique number that can be effected to be associated with a set of accounting data pertaining to a particular client, customer or user to process a print job request according to the present disclosure;
FIG. 4 illustrates a method of using the payment data processing card of FIG. 3 to process a print job request according to the present disclosure;
FIG. 5A illustrates an exemplary embodiment of another payment data processing card that may be dedicated to an account associated with a preferred or custom user for processing of a print job request according to the present disclosure;
FIG. 5B is another embodiment of the payment data processing card of FIG. 5A;
FIG. 5C is an exemplary embodiment of a data processing card that may be issued to one or more users at a copy user area according to the present disclosure: and
FIG. 6 illustrates a method of using the payment data processing cards of FIGS. 5A, 5B and 5C to process a print job request according to the present disclosure.

### DETAILED DESCRIPTION

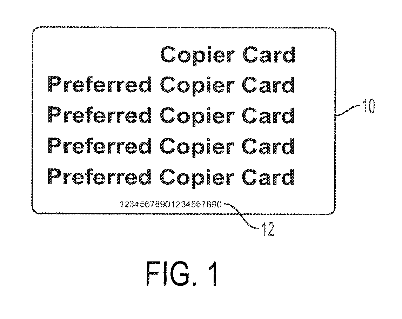

To address the issues related to prior art methods of paying and accounting for reproduction copies described above, with reference to FIGS. 1-4, 5A, 5B, 5C and 6, there is illustrated an example of a print job copying system according to the present disclosure. More particularly, FIG. 1 illustrates an exemplary embodiment of a payment data processing card 10 that may be dedicated to an account associated with a preferred or custom user. The card 10 stores or includes computer-readable data, e.g., alpha-numerical data 12, corresponding to pre-loaded settings of user information relating to at least one of processing and payment for a print job. The card 10 may be a magnetic stripe card, including a credit or debit card, or a smart card, including a smart card having an electronic article surveillance (EAS) tag or a radiofrequency identification (RFID) tag. The card 10 contains a large number encoded on the magnetic stripe (or analogous means for a smart card or other type of card) that points to the user's account on a business point of sale or point of service system (POS). In addition to containing the amount of money or other negotiable value, like rewards points associated with the particular card, the account contains additional information about the user that enables a reproduction copy center to form a relationship with each individual user or to provide custom services for the user. Card holders or users become "Preferred" customers and can then be offered specials not offered to the general public or offered copying and or other services at a reduced rate. Card holders or users become custom users when the card is associated with a preferred relationship to enable implementation of a custom service for the user.

In one embodiment, user information, associated with alpha-numerical data 12, includes at least one of a tax-exempt status, a discount to be applied to the payment for the print job, and a bonus to be provided to the user. The bonus may include a special offer to purchase goods or services not available to the general public, or credit, e.g., credit towards an airline travel, car rental or hotel rental rewards program or other credit for goods or services. At least one of the discount and the bonus may be based on at least one of a magnitude of the payment for the print job and a frequency of requests for a print job. For example, a discount and/or a bonus may be provided to the user based on an individual print job costing over a certain amount or upon the user having spent a cumulative total amount. Thus the card holder or user is a preferred customer of the copy reproduction center.

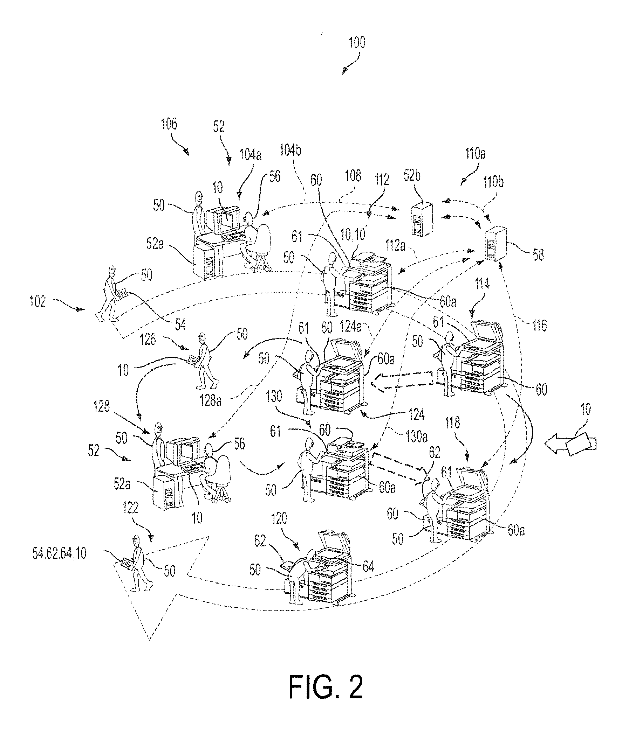

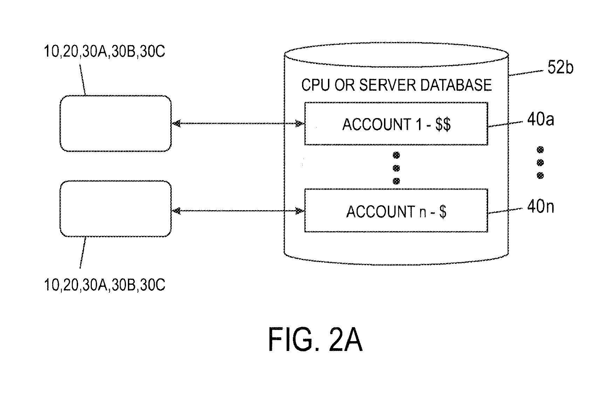

Referring to FIG. 2, there is disclosed a method of authorizing and processing payment for a print job for a preferred user. In one embodiment, method 100 includes using the preferred copier card (PCC) 10 to authorize and process payment for a print job. More particularly, method 100 includes step 102 of enabling a user or customer 50 (hereinafter referred to as user 50), to arrive at a point of sale or point of service (POS) location 52 with original document(s) 54 for which a print job request is to be executed by the user 50. The original document(s) 54 may be either an originally produced document(s) or a reproduction(s) of an originally produced document(s). The user 50 may be the primary holder of the PCC 10 or another party authorized by the user 50 to use the PCC 10. The method 100 includes step 104a of enabling the user 50 to obtain a preferred copier card (PCC) 10 from a POS operator or attendant 56 and step 104b of POS processor 52a communicating with a processor having memory capability or access thereto, e.g., central processing unit (CPU) or POS server 52b.

In one embodiment, the method 100 includes step 106 of the POS operator or attendant 56 obtaining and entering the PCC 10 user information manually by interviewing the user/customer 50 to one of access and establish a preferred user account to authorize processing of the print job request. Following steps 104a, 104b or 106, method 100 includes step 108 of POS server 52b recognizing PCC 10 and step 110a of the POS server 52b communicating with a processor having memory capability or access thereto, e.g., CPU or accounting server 58, and step 110b of determining that PCC 10 has associated funds.

The method 100 includes step 112 of enabling the user 50 to swipe PCC 10 at a print device (PD) 60, e.g., multifunction device (MFD), via a magnetic card reader 61 (or other suitable type of reader appropriate for the type of card, e.g., a smart card or an EAS or RFID card or other suitable card capable of performing the necessary functions) to unlock multifunction device (MFD) or printing device 60 (via step 112a of MFD or printing device processor 60a communicating with accounting server 58). As used herein, printing device (PD) refers either to a printing device that performs only printing, e.g., copying, or a multifunction device (MFD) that performs multiple functions such as printing, e.g., copying, scanning to a file, facsimile transmittal, and similar functions.

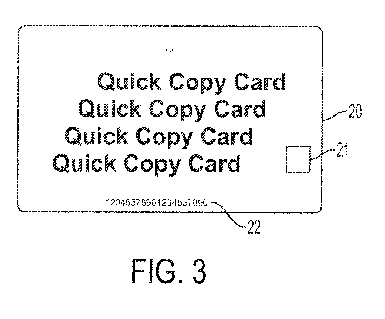

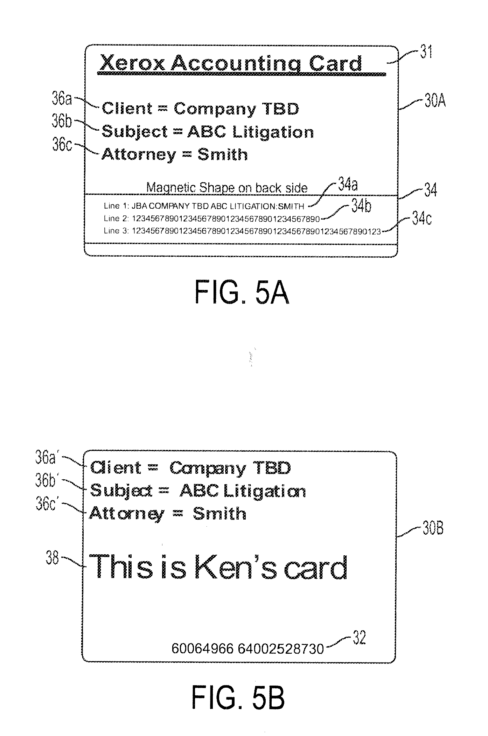

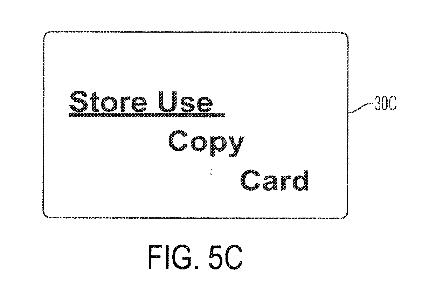

Turning now to FIG. 2A, there are illustrated data processing cards according to the present disclosure, e.g., PCC 10 (see discussion below with respect to FIG. 3 for data processing card 20, and with respect to FIGS. 5A, 5B and 5C for data processing cards 30A, 30B and 30C, respectively) that are associated with a particular set of accounting data, e.g., account data 40a through 40n (where a equals 1 and n is a number greater than 1) residing on a server or other device having memory storage capabilities or access thereto, e.g., a CPU or POS server 52b. For example, when PCC 10 is swiped at card reader 61, alpha-numerical data stored on the card, e.g., alpha-numerical data 12, is transmitted to the server 52b for recognition and association with account data 40a through 40n to enable step 112a of MFD or printing device processor 60a communicating with accounting server 58 to unlock the print device 60.

Returning to FIG. 2, the method 100 includes step 114 of enabling user 50 to run a print job at print device 60. The method 100 includes step 116 of accounting server 58 debiting funds from the account associated with PCC 10 via the printing device processor 60a while print job copies 62 are being produced. In one embodiment, the accounting server 58 debits funds from the account associated with PCC 10 after completion of the print job. In one embodiment, the accounting server 58 may just log usage data while POS server 52b calculates actual costs of the print job copies 62 that have been produced.

The method 100 also includes step 118 of the printing device 60 completing the print job by producing at least a portion of the print job, i.e., at least some of or all of requested print job copies 62, thereby ending the print job session.

Step 120 includes, e.g., via the printing device processor 60a, effecting printing out print job receipt 64 which includes a detailed cost breakdown for the print job, e.g., number of black and white copies, number of color copies, number of 8.5 inch x 11 inch copies, number of A4 copies, etc.

Step 122 includes enabling the user 50 to leave the POS 52 with finished print job 62, originals 54, print job receipt 64, and PCC 10.

In one embodiment, in step 124, if the funds associated with the PCC 10 are depleted while the print job is being executed at the printing device 60 by the user 50, i.e., step 124a includes the accounting server 58 communicating with the printing device processor 60a to indicate that the funds associated with the PCC10 are depleted, the method 100 includes step 126 of enabling the user 50 to take the PCC 10 to the POS operator or attendant 56 at the POS 52. Step 128 includes enabling the user 50 to authorize or to provide additional funds to be added to the PCC 10, e.g., via step 128a of the POS processor 52a communicating with accounting server 58.

Step 130 includes enabling the user 50 to return to the printing device 58, to swipe the PCC 10, e.g., via magnetic card reader 61, and to reinitiate the print job request, e.g., via step 130a of the printing device processor 60a communicating with the accounting server 58, to return to step 118 of the print device 60 completing the print job by producing at least a portion of the print job, i.e., at least some of or all of requested copies 62, thereby ending the print job session.

The step 120 of, e.g., via the printing device processor 60a, effecting printing out print job receipt 64, which includes a detailed cost breakdown for the print job, e.g., number of black and white copies, number of color copies, number of 8.5 inch x 11 inch copies, number of A4 copies, etc. and enabling the user 50 to leave the POS 52 with finished print job 62, originals 54, print job receipt 64 associated with PCC 10, and PCC 10, is executed thereafter, followed by step 122 as described above.

Referring now to FIG. 3 there is illustrated an exemplary embodiment of a payment data processing card 20 according to the present disclosure that may be produced as an off-the-shelf item that contains at least one unique number 22 that can be effected to be associated with a set of accounting data pertaining to a particular client, customer or user. Payment data processing card 20 is referred to herein as a quick copy card (QCC). The at least one unique number 22 may be an account number having at least 16 digits. The card 20 may have a scriptable surface on which a user may write identifying information, e.g., an account number, a user identification number, a subject number and/or a subject so that the card 20 may be distinctly recognized by the user. As described above, QCC 20 may be a magnetic stripe card, a smart card, or an EAS or RFID card, each capable of storing the at least one unique number 22. Since the QCC 20 may be fairly expensive to manufacture, and in fact may cost more than the gross revenue received from the user based on the number of copies made, in one embodiment, the QCC 20 includes an adjustable limit, which may be pre-defined, and which is associated with the print job. For example, the limit may be a financial limit such as cost of copies made, or a usage limit, such as number of copies, size of copies, or type of copies. In one embodiment, the QCC 20 may include an attached electronic article surveillance (EAS) tag or label 21 whose function is to trigger an alarm via an electronic article surveillance reader (not shown) having a read range and detecting the surveillance tag or label 21 when a user 50 leaves or attempts to leave a location, e.g., point of service, with the QCC 20. In effect, the EAS reader detects the tag or label 21 when the tag or label 21 is within the read range of the EAS reader.

As used herein, the EAS tag or label 21 includes radiofrequency identification (RFID) tags or labels or other suitable surveillance tags or labels. Similarly, as used herein, electronic article surveillance reader refers to an EAS or RFID reader or other reader suitable for the particular tag or label. Also as used herein, tag refers to either a tag or a label. The embodiments are not limited in the context of the foregoing limitations.

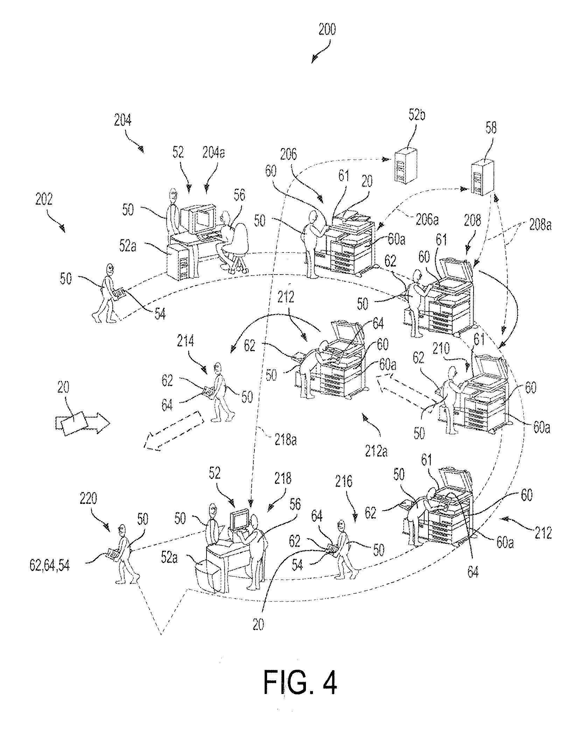

Referring now to FIG. 4, there is disclosed a method of using the quick copy card (QCC) 20 to authorize and process payment information for a print job. More particularly, method 200 includes step 202 of enabling a first party, e.g., user 50, to arrive at POS location 52 (or a self-service payment processor, not shown) with original document(s) 54 for which a print job request is to be executed by the user 50. Method 200 includes step 204 of enabling the user 50 to obtain from POS operator or attendant 56 quick copy card (QCC) 20. In one embodiment, method 200 includes step 204a of the POS operator or attendant 56 adjusting the pre-defined monetary limit by instructing the POS processor 52a to increase or decrease the limit based on the anticipated scope and size of the print job by the user 50. There are no funds received from or transferred to the user 50 until completion of the print job.

Method 200 also includes step 206 of user 50, after moving to printing device 60, swiping QCC 20 at printing device 60 via card reader 61 and unlocking printing device 60 (via step 206a of printing device processor 60a communicating with accounting server 58). As indicated above, QCC 20 may be, for example, a magnetic stripe card, a smart card, or an EAS or RFID card or other suitable card capable of performing the necessary functions. In addition, card reader 61 may be a magnetic card reader or other suitable type of reader appropriate for the type of card, e.g., a smart card or an EAS or RFID card or other suitable card capable of performing the necessary functions.

Method 200 further includes step 208 of enabling the user 50 to run a print job at printing device 60 and, in one embodiment, step 208a of accounting server 58 debiting against a financial limit or a usage limit associated with QCC 20 while print job copies 62 are being produced via communication with printing device processor 60a. Thus, debt may be accumulated against the limit associated with QCC 20, and the debiting of funds may be executed following completion of the print job.

Method 200 also includes step 210 of printing device 60 completing the print job as a print job output by producing at least a portion of the print job, i.e., some of or all of requested copies 62, thereby ending the print job session, while step 208a of accounting server 58 debiting against the limit associated with QCC 20 while print job copies 62 are being produced until completion, is executed via communication with printing device processor 60a. Thus, debt may be accumulated against the limit associated with QCC 20, and the debiting of funds may be performed following completion of the print job.

In one embodiment, following step 210 of the printing device 60 completing the print job as a print job output, step 212 includes, e.g., the printing device processor 60a, effecting printing out print job bill or receipt 64 which includes a detailed cost breakdown for the print job, e.g., number of black and white copies, number of color copies, number of 8.5 inch x 11 inch copies, number of A4 copies, etc. In one embodiment, method 200 includes step 212a of enabling the user 50 to leave the QCC 20 at the printing device 60.

Method 200 illustrates an abnormal condition exemplified by step 214
wherein user 50 takes the bill 64, that has not been pre-paid and is based on the debt or financial limit associated with the QCC 20, and print job output 62 and exits the POS 52 without paying the bill. Since there is a particular debt limit associated with QCC 20, the financial loss to a proprietor of POS 52 is limited to the amount established by the debt limit associated with the QCC 20. In one embodiment, if the first party, e.g., user 50, leaves/attempts to leave the point of service 52 with the data processing card, i.e., QCC 20, the EAS tag 21 actuates an alarm via an EAS reader (not shown) having a read range and detecting the tag 21 when the tag 21 is within the read range of the EAS reader.

In one embodiment, following step 212 of the printing device printing out print job receipt or bill 64 which includes a detailed cost breakdown for the print job, e.g., number of black and white copies, number of color copies, number of 8.5 inch x 11 inch copies, number of A4 copies, etc., the method 200 includes step 216 of enabling the user 50 to take originals 54, print job output 62, bill 64 and QCC 20 to POS location 52 and step 218 which includes enabling the user 50 to pay the POS Customer Service Associate, operator or attendant 56 at POS location 52 the balance of the bill 64 via step 218a of the POS processor 52a communicating with the POS server 52b. User 50 pays for print job output 62 based on bill 64. The method 200 includes enabling user 50 to receive credit for any unsatisfactory copies attributable to malfunction of the printing device 60.

Method 200 includes step 220 of enabling the user 50 to leave the POS location 52 with the finished print job 62 and print job receipt 64.

Referring to FIG. 5A, there is illustrated an exemplary embodiment of a payment data processing card 30A that enables a short hand method of entering customer specific data used in accounting, thereby obviating the need for manual entry of the customer specific data. More particularly, payment data processing card 30A may be a magnetic stripe card that is configured to store at least one track and as illustrated in FIG. 5A up to 3 tracks of computer-readable data in a magnetic stripe 34 that is disposed on a rear side of the card 30A. As described above, card 30A may be, in addition to a magnetic stripe card, for example, a smart card, or an EAS or RFID card or other suitable card capable of performing the necessary functions.

For simplicity, although the magnetic stripe 34 is disposed on the rear side of card 30A, the magnetic stripe 34 is illustrated on a front face 31 of the card 30A. The magnetic stripe 34 may include tracks 34a, 34b and 34c, wherein each track 34a, 34b and 34c may include, for example, up to 79 alpha numeric characters plus up to 147 additional numbers. The alpha numeric characters may be encoded for example in 7 bit ASCII format. The data stored in the magnetic stripe tracks 34a, 34b and 34c may include pre-set billing limits. Card 30A may also be configured with custom front side graphics and lettering, as well as custom magnetic programming. The front side graphics and lettering on the front side 31 of the card 30A may contain easily recognizable glyphs, logos or simple text to indicate where the card 30A can be applied. For example, FIG. 5A presents a particular example of magnetic card 30A for use by a hypothetical legal services company in support of Company TBD's legal costs regarding ABC litigation. The front face 31 includes at least one line of visible information, e.g., a first line 36a where "Client" is identified as "Company TBD", a second line 36b where "Subject" is identified as "ABC Litigation" and a third line 36c where "Attorney" is identified as "Smith". Additional lines may be added to further distinguish the accounting information as desired or necessary.

Thus, the user information, in the form of the computer readable data, e.g., alpha-numerical data 36a, 36b and 36c, may include at least one of a user name, an account number, a user identification number, a subject number and a subject. For example, the alpha-numerical data in tracks 34a, 34b and 34c may represent the client number, matter or subject number, and/or a subject of a professional service organization such as a law firm or engineering firm to which the costs of the print job are to be charged. Thus the user of the card is a custom user since the card enables separate cost accounting. Storage of the alpha-numerical data 36a, 36b and/or 36c on the data processing card 30A enables reduced effort when contrasted to manual insertion of such data at a print job user interface.

The actual data encoding can be tailored to the current Xerox Secure Access Unified ID System (Xerox Corporation, Rochester, New York, USA) and Job Based Accounting application programming interfaces (APIs) and is not specified. As can be appreciated, the magnetic stripe card 30A according to the present disclosure functions as a short hand method of entering customer specific data used in accounting and is referred to herein as a custom copier card (CCC) and that print jobs authorized and processed by use of CCC 30A are billable to a valid account number. The card 30A may also be a smart card or an EAS or RFID card or other suitable card as discussed above.

FIG. 5B illustrates an exemplary embodiment of another payment data processing card 30B according to the present disclosure that may be produced as an off-the-shelf item that contains at least one unique number 32 that can be effected to be associated with a set of accounting data pertaining to a particular client, customer or user. Payment data processing card 30B contains at least one line, e.g., three lines 36a', 36b' and 36c' that contain information analogous to lines 36a, 36b, and 36c of CCC 30A, e.g., a first line 36a' where "Client" is identified as "Company TBD", a second line 36b' where "Subject" is identified as "ABC Litigation" and a third line 36c' where "Attorney" is identified as "Smith". Additional lines may be added to further distinguish the accounting information as desired or necessary. Payment data processing card 30B may be referred to as a custom quick copy card (CQC). CQC 30B may have associated funds based on a pre-defined monetary limit.

As noted above, CQC 30B may be an off-the-shelf pre-programmed magnetic stripe card having more than one track, e.g., a first track and a second track (neither of which is shown). A unique number may be encoded on the first track or the second track. The unique number is long enough to differentiate the various customer billing needs. Such off the shelf cards may use account numbers of at least 16 digits. Such cards may have a white matte finish which can be written on by permanent marker. The customer or user 50 may write the client, subject, matter etc. on the CQC 30B to identify the CQC in a way to facilitate recognition at a later time. In a similar manner as described above, card 30B may be, in addition to a magnetic stripe card, for example, a smart card, or an EAS or RFID card or other suitable card capable of performing the necessary functions.

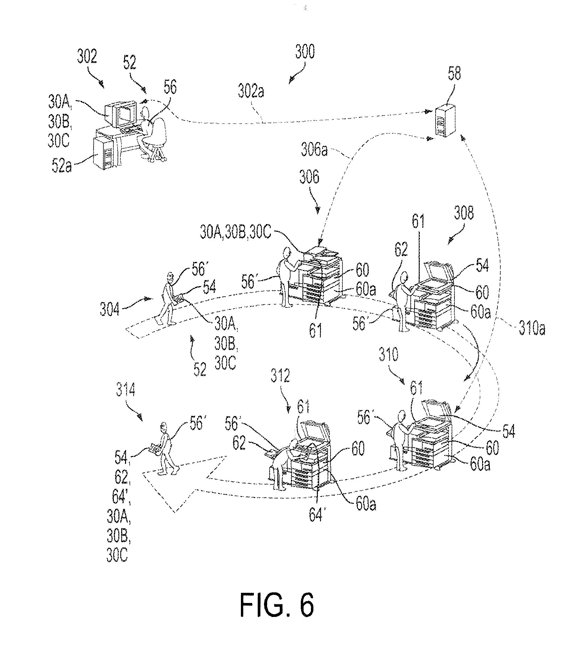

Referring to FIG. 6, at the location or point of service, card reader 61 may be connected to the accounting server 58 in such a way that the accounting server 58 can receive the contents of the first and/or second tracks. When the card 30B is swiped, the accounting server 58 presents a user interface screen (not shown) at the POS 52 that enables the POS admin 56 to enter the client, subject, matter information 36a', 36b', 36c', respectively, and related information that the user 50 or user 56' wishes to associate with the particular card 30B. The card 30B is connected to, or associated with, an existing account or a new account is created on the server 58 if one is needed. In the event multiple cards are needed for a particular client, subject, and/or matter, the steps are repeated as many times as needed. These cards can then be distributed within the customer environment as required.

When the customer/ user 50 or 56' needs to make copies, the customer/ user 50 or 56' swipes the card 30B on the card reader 61 mounted on the printing device 60. As previously described, card reader 61 may be a magnetic card reader or other suitable type of reader appropriate for the type of card, e.g., a smart card or an EAS or RFID card or other suitable card capable of performing the necessary functions.

The card reader 61 transfers the first and/or second and / or third track information to the printing device processor 60a, which then passes the unique number from the first and/or second and/or third track information to the partner accounting server 58 for decoding. The printing device processor 60a creates a temporary account to keep track of usage information and at the end of the print job, the user information is passed to the accounting server 58. The server 58 associates the usage with the particular card swiped. The server 58 then looks up the client, subject, matter from the card and produces an appropriate bill, or logs usage against user 50 for periodic rollup, e.g., a monthly bill.

Referring now to FIG. 5C, there is illustrated an exemplary embodiment of at least one payment data processing card 30C that may be issued to one or more users at a copy user area which may be the POS location 52 or an area that excludes outside parties such as customers. Payment data processing card 30C may be dedicated to a particular customer or account number or may be applied for generic usage. As described above, card 30C may be, in addition to a magnetic stripe card, for example, a smart card, or an EAS or RFID card or other suitable card capable of performing the necessary functions.

Payment data processing card 30C will be referred to herein as a store use card (SUC). The account number may be a set of accounting data pertaining to a particular client, customer or user.

Referring now to FIG. 6, there is disclosed a method of using the three cards 30A, 30B and 30C to authorize and process accounting information for a print job. More particularly, method 300 includes step 302 of at least a first party, e.g., POS Customer Service Associate 56, creating at least one data processing card 30A, 30B or 30C for issuance to at least the first party 56 at a copy user area entry point, e.g., at POS area or location 52, via step 302a of copy user area entry point or POS processor 52a communicating with accounting server 58.

The method 300 includes step 304 of the at least first party, and in the example shown, a second party 56', e.g., an employee of an organization that desires to make copies for itself or for another party such as a client or customer, entering the POS area or location 52 with at least one original document 54 and at least one card 30A, 30B or 30C and moving to printing device 60.

Step 306 includes the second party 56' swiping the card 30A, 30B or 30C via magnetic card reader 61 at printing device 60 to unlock printing device 60 via step 306a of printing device processor 60a communicating with accounting server 58. As previously described, card reader 61 may be a magnetic card reader or other suitable type of reader appropriate for the type of card, e.g., a smart card or an EAS or RFID card or other suitable card capable of performing the necessary functions.

Step 308 includes the second party 56' running one or more print jobs of the at least one original document 54 to obtain print job output 62.

Step 310 includes the printing device 60 completing the print job by producing at least some of or all of requested copies 62, thereby ending the print job session via step 310a of the printing device processor 60a communicating with the accounting server 58.

When executing step 306, steps 306a and 310 by swiping the CCC 30A, the reader 61 transfers the track 14a information to the printing device processor 60a as two pieces of data. The printing device processor 60a transfers the data to partner accounting server 58 for decoding. The printing device processor 60a creates a temporary account to keep track of usage and at the end of the print job 62, the printing device processor 60a transfers the temporary account information to the accounting server 58. The accounting server 58 communicates with a dynamically updatable database (not shown) that may be either internal or external to the accounting server 58. The accounting server 58 associates the usage with the particular client, subject, and/or matter encoded on the CCC 30A, and then produces an appropriate bill as described below.

Step 312 includes the printing device 60 producing, via the printing device processor 60a, a print job log 64' with details of print job output 62.

Step 314 includes second party 56' exiting from copy user area or location 52 with at least one original document 54, at least one print job output 62, print job log 64 and card 30A, 30B or 30C.

Methods 100, 200 and 300 may be applied to support pure accounting requirements, where there are no limits to usage by the holder of the card. Additionally, methods 100, 200 and 300 may be applied in applications where the user is limited in the number of copies based on a variety of parameters such as number of monochrome or color copies, paper size limits, etc. if the accounting server is so programmed. Additional services like print, scan and fax can be tracked and with limits applied to measurable parameters like number of pages printed, scanned pages sent via email or fax send time on the phone line or long distance charges.

In view of the foregoing, it can be appreciated with reference to FIGS. 3 and 4 that the present disclosure relates to a data processing card, e.g., QCC 20,
wherein the card 20 includes computer-readable data corresponding to information relating to processing a print job, and wherein the card includes an unpaid for limit associated with the processing of a print job. The limit may be at least one of a financial limit and a usage limit. The limit may be adjustable. The usage limit may be a limit based on user information that includes usage data having at least one of number of copies, type of copies, and cost of copies associated with the print job. The data processing card QCC 20 may further include a surveillance tag 21.

It can be appreciated also that the present disclosure has also described, with reference to FIG. 4, a method of using the data processing card QCC 20 to process payment information for a print job at a point of service, e.g., POS 52. The method 200 includes step 202 of enabling user 50 to arrive at the POS 52 with at least one document 54 for which a print job request is to be executed by the user 50 and step 204 of enabling the user 50 to obtain a data processing card, e.g., QCC 20, for a print job, with the data processing card QCC 20 having an unpaid for limit associated with the print job. The method 200 also includes step 208 of enabling the user 50 to run a print job at print device 60, and step 210 of enabling completing at least a portion of the print job as print job output 62 by producing at least a portion of the at least one document 54, while accumulating limit data for payment for the print job. Following step 210 of enabling completing at least a portion of the print job as a print job output, the method 200 further includes step 212 of enabling printing out a print job receipt 64, and step 212a of enabling the user 50 to leave the data processing card QCC 20 within the point of service 52. Following step 212 of enabling printing out of the print job receipt or bill 64, the method includes enabling the user 50 to pay, via step 218, for the print job via the print job bill 64 prior to exiting the point of service 52. The limit associated with the print job may be at least one of a financial limit and a usage limit.

The method 200 may include step 204a of enabling adjusting of the limit by instructing a processor, e.g., CPU or POS server 52b or CPU or accounting server 58, to increase or decrease the limit associated with the print job. In one embodiment, the method 200 is implemented wherein the point of service 52 includes a self-service payment processor (not shown) to which the limit data is transmitted. The user 50 is enabled to pay for the print job at the self-service payment processor based on the limit data, and is enabled to leave the data processing card QCC 20 within the point of service 52 prior to exiting the point of service 52.

In one embodiment, the method 200 is implemented wherein the point of service 52 includes a self-service payment processor (not shown) configured to enable the user 50 to pay for the print job based on the print job receipt or bill 64.

It can be appreciated also from the above description that method 200 may include using a data processing card to process payment information for a print job,
wherein the method 200 includes, via step 204, providing to user 50 data processing card QCC 20 having electronic article surveillance tag 21, wherein the data processing card QCC 20 enables payment for a print job. The method includes, via step 206, providing at least one print device 60 and providing an electronic article surveillance reader (not shown) having a read range, wherein, following the user 50 using the data processing card QCC 20 to execute a print job using the at least one print device 60, the electronic article surveillance reader actuates an alarm by detecting the electronic article surveillance tag 21 if the tag 21 is within the read range of the reader.

It can be appreciated also from the above description that the present disclosure relates to, with reference to FIGS. 1, 5A, 5B and 5C, a data processing card, e.g., PCC 10, CCC 30A, CQC 30B, or SUC 30C. Each of the cards PCC 10, CCC 30A, CQC 30B, or SUC 30C includes computer-readable data. For PCC 10, the computer-readable data relates to payment information for a print job, whereas for CCC 30A, CQC 30B and SUC 30C, the computer readable data relates to processing information for a print job.

For PCC 10, the payment information includes information, e.g., alpha-numerical data 12, indicative of at least one payment source associated with at least one user, e.g., a preferred user who may or may not be user 50 in FIG. 2. For PCC 10, the computer-readable data also includes data corresponding to user information relating to the payment information for the print job. The user information may include at least one of a tax-exempt status, a discount to be applied to the payment for a print job, and a bonus to be provided to the user. At least one of the discount and the bonus may be based on at least one of a magnitude of the payment for the print job and a frequency of requests for a print job. The user information may include usage data including at least one of number of copies, type of copies, and cost of copies associated with the print job.

Referring to FIGS. 2 and 2A, it can also be appreciated that method 100 is a method of authorizing and processing payment for a print job for a preferred user. Method 100 includes one of steps 110a and 110b of determining that a preferred data processing card, e.g., PCC 10, has funds associated therewith wherein, if no funds are associated with PCC 10, the method 100 is implemented by adding funds to the account associated with the preferred data processing card, and step 106 of obtaining information from the preferred user 50 to one of access and establish a preferred user account to authorize processing of the print job. The method 100 also includes step 114 of enabling the running of a print job at print device 60, step 116 of debiting funds from the preferred user account, and step 118 of enabling completing at least a portion of the print job.

In one embodiment, step 116 may be implemented wherein a processor, e.g., POS 52b or accounting server 58, debits funds from the preferred user account via a processor of the print device, e.g., processor 60a, while the print job copies 62 are being produced. The preferred user information may include at least one of a user name, an account number, a user identification number, a print job number, a subject number and a subject. The preferred user information may also include at least one of a tax-exempt status, a discount to be applied to the payment for a print job, and a bonus to be provided to the user. At least one of the discount and the bonus may be based on at least one of a magnitude of the payment for a print job and a frequency of requests for a print job.

Referring to FIGS. 5A, 5B and 5C for cards CCC 30A, CQC 30B, and SUC 30C, respectively, the computer-readable data also includes computer-readable data corresponding to user information relating to the processing of the print job. In one embodiment, the user information includes at least one of a user name, an account number, a user identification number, a print job number, a subject number and a subject to enable subsequent billing for the print job on a periodic or invoice basis rather than to receive immediate payment following completion of the print job.

For CCC 30A, the user information is pre-programmed in the form of pre-loaded settings of user information on the card CCC 30A and is customized to a particular user. For CQC 30B, the user information is adjustable and the same CQC 30B may be reset repeatedly such that the user information subsequently pertains to a different user. For SUC 30C, the processing information is limited to printing out a log of usage data, such as number of copies, type of copies, etc.

Referring to FIGS. 5A, 5B, and 5C in conjunction with FIG. 6, the data processing cards CCC 30A, CQC 30B and SUC 30C may each be configured
wherein the respective card includes computer-readable data, wherein the respective card is configured to enable a first party, who may be an employee of a particular organization, e.g., user 56, to program the card to relate the computer-readable data to at least one of processing and payment for a print job. The respective cards CCC 30A, CQC 30B and SUC 30C may each be configured to enable the first party, e.g., user 56, to program the respective card to at least one of create and access an account associated with one of the first party, e.g., user 56, and at least a second party, e.g., user 56', who may also be an employee of the same organization as user 56. The respective cards CCC 30A, CQC 30B and SUC 30C each include computer-readable data corresponding to information relating to processing and payment for a print job via the account for the one of the first party and at least a second party.

More particularly, CCC 30A may be configured to enable the first party, e.g., user 56, to program the card to a dedicated account associated with the one of the first party, e.g., user 56, and at least a second party, e.g., user 56', and wherein the card CCC 30A includes computer-readable data corresponding to pre-loaded settings of the information relating to at least one of processing and payment for a print job.

Referring again to FIGS. 5 and 6, the method 300 may be implemented of authorizing and processing at least one of processing and payment information for a print job. Method 300 includes step 302 of providing a data processing card, e.g., CCC 30A, CQC 30B, or SUC 30C, that includes computer-readable data relating to at least one of processing information and payment information for a print job, wherein the payment information includes information indicative of at least one payment source associated with at least one user, and wherein the data processing card, e.g., CCC 30A, CQC 30B, or SUC 30C, further includes computer-readable data corresponding to user information relating to the at least one of processing and payment for a print job.

The method 300 may further include, via steps 306, 306a and 310, debiting of funds from the at least one payment source after the print job has been run by a processor debiting funds from an account associated with the data processing card.

As noted above with respect to CCC 30A, CQC 30B and SUC 30C, the method may be implemented wherein the user information includes at least one of a user name, an account number, a user identification number, a print job number, a subject number and a subject and the user information includes usage data including at least one of number of copies, type of copies, and cost of copies associated with the print job.

## Claims

1. A data processing card,
wherein the card includes computer-readable data corresponding to information relating to processing a print job, and
wherein the card includes an unpaid for limit associated with the processing of a print job.

2. The data processing card according to claim 1, wherein the limit is at least one of a financial limit and a usage limit.

3. The data processing card according to claim 1, wherein the limit is adjustable.

4. The data processing card according to claim 1, further comprising a surveillance tag.

5. A data processing card,
wherein the card includes computer-readable data relating to at least one of processing information and payment information for a print job,
wherein the payment information includes information indicative of at least one payment source associated with at least one user, and
wherein the data processing card further includes computer-readable data corresponding to user information relating to the at least one of processing and payment for a print job.

6. The data processing card according to claim 5, wherein the user information includes at least one of a user name, an account number, a user identification number, a print job number, a subject number and a subject.

7. The data processing card according to claim 5, wherein the user information includes at least one of a tax-exempt status, a discount to be applied to the payment for a print job, and a bonus to be provided to the user.

8. The data processing card according to claim 7, wherein at least one of the discount and the bonus is based on at least one of a magnitude of the payment for a print job and a frequency of requests for a print job.

9. The data processing card according to claim 5, wherein the user information includes usage data comprising at least one of number of copies, type of copies, and cost of copies associated with the print job.

10. A data processing card,
wherein the card includes computer-readable data,
wherein the card is configured to enable a first party to program the card to relate the computer-readable data to at least one of processing and payment for a print job,
wherein the card is configured to enable the first party to program the card to at least one of create and access an account associated with one of the first party and at least a second party, and
wherein the card includes computer-readable data corresponding to information relating to at least one of processing and payment for a print job via the account for the one of the first party and at least a second party.

11. The data processing card according to claim 10,
wherein the card is configured to enable the first party to program the card to a dedicated account associated with the one of the first party and at least a second party, and
wherein the card includes computer-readable data corresponding to pre-loaded settings of the information relating to at least one of processing and payment for a print job.

12. A method of using a data processing card to process payment information for a print job, the method comprising:
providing a data processing card having an electronic article surveillance tag to a user, the data processing card enabling payment for a print job;
providing at least one print device; and
providing an electronic article surveillance reader having a read range,
wherein following the user using the data processing card to execute a print job using the at least one print device, the electronic article surveillance reader actuates an alarm by detecting the electronic article surveillance tag if the tag is within the read range of the reader.

13. A method of using a data processing card to process payment information for a print job at a point of service, the method comprising:
enabling a user to arrive at a point of service with at least one document for which a print job request is to be executed by the user;
enabling the user to obtain a data processing card for a print job, the data processing card having an unpaid for limit associated with the print job;
enabling the user to run a print job at a print device; and
enabling completing at least a portion of the print job as print job output by producing at least a portion of the at least one document, while accumulating limit data for payment for the print job.

14. The method according to claim 13, wherein following the enabling completing at least a portion of the print job as a print job output, the method further comprises:
enabling printing out a print job bill; and
enabling the user to leave the data processing card within the point of service.

15. The method according to claim 14, wherein following enabling the printing out the print job bill, the method further comprises enabling the user to pay for the print job via the print job bill prior to exiting the point of service.
